# FASCICULE DE BREVET EUROPEEN

(11) **EP 3 656 627 B1**
(45) Date de publication et mention de la délivrance du brevet: **04.05.2022**
(21) Numéro de dépôt: 19211022.9
(22) Date de dépôt: 22.11.2019
(51) Int. Cl.: B61C 17/00, B61D 27/00, B61F 3/08

(54) **SYSTÈME DE PROTECTION DE CHÂSSIS DE VÉHICULE FERROVIAIRE**
SCHUTZSYSTEM DES FAHRGESTELLS EINES SCHIENENFAHRZEUGS
SYSTEM FOR PROTECTING A FRAME OF A RAILWAY VEHICLE

(30) Priorité: 22.11.2018 FR 1871715
(43) Date de publication de la demande: 27.05.2020
(73) Titulaire: SpeedInnov, 75008 Paris (FR)
(72) Inventeur: DEBOST, Pierre, 92230 GENEVILLIERS (FR)
(74) Mandataire: Lavoix

(56) Documents cités:
- WO-A1-2010/026049
- WO-A1-2012/060139
- WO-A1-2017/129317
- WO-A1-2018/137758
- JP-A- S4 956 021
- JP-A- 2009 018 648

## Description

La présente invention concerne un système de protection de châssis de véhicule ferroviaire, adapté pour une protection contre l'accumulation de glace et/ou de neige dans des conditions hivernales.

L'invention se situe dans le domaine de l'amélioration des véhicules ferroviaires.

Elle s'applique à un véhicule ferroviaire du type comportant au moins une caisse montée sur un châssis, le châssis étant monté sur au moins un bogie sur lequel sont fixés des moteurs de traction des roues dudit véhicule, chaque moteur de traction étant alimenté par au moins un module de puissance adapté à fournir une puissance électrique audit moteur, et une colonne de refroidissement dudit au moins un module de puissance permettant une circulation d'air externe vers des évacuations latérales et/ou centrales de bas de caisse.

Dans des conditions hivernales, en particulier lorsqu'un véhicule ferroviaire roule dans des conditions de neige, la neige a tendance à s'accumuler au niveau du bas de caisse du véhicule ferroviaire, notamment sur le bogie et autour du bogie, ainsi que sur les moteurs de traction. L'accumulation de neige peut bloquer le débattement et la rotation du bogie ou des moteurs de traction.

Une solution usuelle pour éviter un tel problème est d'asperger les éléments du châssis de glycol, ou d'un autre produit chimique de type antigel, dont le point de congélation est bien inférieur à 0° Celsius.

Bien entendu, une grande quantité d'un tel produit est nécessaire pour un véhicule ferroviaire, par exemple un train. De plus, lors de son application, et ensuite durant le roulement du véhicule, le produit chimique se répand partiellement sur la voie, et donc est susceptible de polluer.

Le document WO2010/026049 décrit un système de refroidissement pour moteur de véhicule ferroviaire.

L'invention a pour objet de remédier aux inconvénients de l'art antérieur, en proposant un système de protection de châssis de véhicule ferroviaire moins coûteux et plus écologique.

A cet effet, l'invention propose un véhicule ferroviaire comportant au moins une caisse montée sur un châssis, le châssis supportant au moins un bogie sur lequel sont fixés des moteurs de traction des roues dudit véhicule, chaque moteur de traction étant alimenté par au moins un module de puissance adapté à fournir une puissance électrique audit moteur, et au moins une colonne de refroidissement dudit au moins un module de puissance permettant une circulation d'air externe vers des dispositifs d'évacuation latérale et/ou centrale de bas de caisse. Ce véhicule ferroviaire comporte un système de protection du châssis comportant au moins un panneau déflecteur monté sur ledit châssis en vis-à-vis de la colonne de refroidissement et adapté à être positionné dans deux positions comprenant une première position de déviation de l'air traversant ladite colonne de refroidissement vers au moins le bogie et une deuxième position d'évacuation d'air, l'air traversant ladite colonne de refroidissement étant chauffé par au moins un module de puissance.

Avantageusement, le système de l'invention permet de réutiliser astucieusement l'air extérieur, réchauffé en traversant la ou chaque colonne de refroidissement du module de puissance, et souffler cet air vers le châssis du véhicule, notamment le bogie. Le réchauffement de l'air extérieur de 10 à 15 degrés Celsius par le module de puissance est suffisant pour maintenir la température des éléments de châssis suffisamment élevée pour éviter des dépôts de neige ou de gel.

Le véhicule ferroviaire selon l'invention peut présenter une ou plusieurs des caractéristiques ci-dessous, prises indépendamment ou dans toutes leurs combinaisons techniquement acceptables.

Il comporte en outre au moins un panneau d'obturation adapté à obturer un dispositif d'évacuation latérale et/ou centrale de bas de caisse correspondant.

Dans ladite première position de déviation de l'air, le panneau déflecteur est positionné à un angle compris entre 30 et 60 degrés par rapport à une direction horizontale.

Le panneau déflecteur est métallique ou en composite.

Le véhicule ferroviaire comporte une pluralité de colonnes de refroidissement, comportant une pluralité de panneaux déflecteurs, chaque panneau déflecteur étant positionné en regard d'une colonne de refroidissement.

D'autres caractéristiques et avantages de l'invention ressortiront de la description qui en est donnée ci-dessous, à titre indicatif et nullement limitatif, en référence aux figures annexées, parmi lesquelles :
- [Fig 1] la figure 1 est une vue schématique en coupe de profil d'une locomotive de véhicule ferroviaire illustrant un flux d'air utilisé dans le système de protection selon un mode de réalisation ;
- [Fig 2] la figure 2 est une vue schématique en coupe selon A-A correspondant au mode de réalisation de la figure 1 ;
- [Fig 3] la figure 3 est une vue schématique en coupe selon C-C correspondant au mode de réalisation de la figure 1 ;
- [Fig 4] la figure 4 est une vue schématique de profil d'une portion de véhicule.

L'invention sera décrite ci-après dans son application à un véhicule ferroviaire de type train, adapté à rouler sur des rails en extérieur.

L'invention s'applique particulièrement dans des conditions climatiques hivernales, lorsque les températures de l'air extérieur sont susceptibles de descendre en dessous d'un seuil minimal de température, par exemple 5° C.

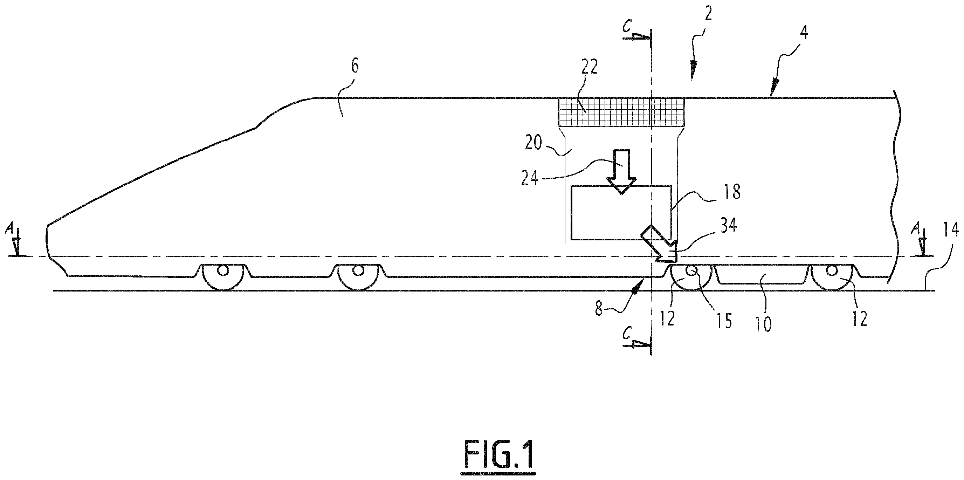

Un mode de réalisation d'un système de protection selon l'invention sera décrit en référence aux figures 1 à 4, dans un véhicule ferroviaire 2, dont seule une portion de locomotive 4 est représentée schématiquement.

Le véhicule ferroviaire 2 comporte une caisse 6 montée sur un châssis 8, qui supporte au moins un bogie 10.

Le véhicule ferroviaire 2 comporte des roues 12 adaptées à rouler sur des rails 14. Les roues 12 sont montées sur des essieux 15 qui sont entraînées par des moteurs de traction 16, alimentés en puissance électrique par un module de puissance 18.

Il est entendu que les éléments décrits sont représentés schématiquement.

Le véhicule ferroviaire 2 comporte au moins une colonne de refroidissement 20 du module de puissance 18, un tel module de puissance comportant un transformateur de puissance (non représenté) qui dégage une grande quantité de chaleur, et qu'il est nécessaire de refroidir pour éviter une surchauffe entraînant des dysfonctionnements de la chaîne de traction.

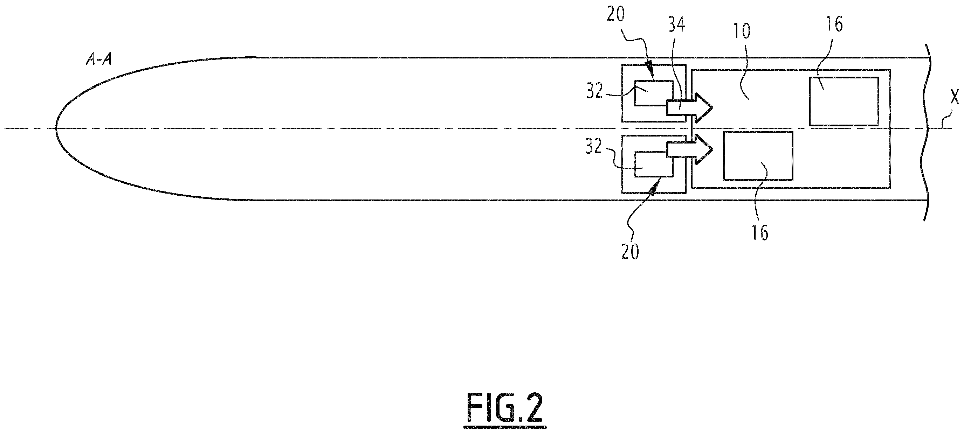

Dans un mode de réalisation, le véhicule ferroviaire comporte deux colonnes de refroidissement 20 placées symétriquement par rapport à un axe X comme montré sur la figure 2.

La colonne de refroidissement reçoit de l'air par une grille 22 ou plus généralement un dispositif d'entrée d'air, située de préférence sur le toit de la caisse 6.

Le flux d'air reçu, représenté schématiquement par la flèche 24, travers la colonne de refroidissement 20 à proximité du module de puissance 18, de manière à refroidir ce module et éviter une surchauffe.

De manière classique, le flux d'air 24 est dirigé vers des dispositifs d'évacuation 26 par exemple des grilles, destinées à faire sortir ce flux d'air réchauffé soit par des flancs latéraux de la caisse 6, soit par le bas de caisse.

A la différence de ce système de refroidissement du module de puissance et d'évacuation de l'air utilisé à cet effet, le système de protection 30 selon l'invention comporte au moins un panneau déflecteur 32, qui a pour fonction de diriger le flux d'air 24 ayant traversé la colonne de refroidissement 20 vers le bogie 10. Les flèches 34 indiquent schématiquement la déviation de l'air vers le châssis, en particulier le bogie 10 du véhicule ferroviaire 2.

Par exemple un panneau déflecteur 32 est monté en regard de chaque colonne de refroidissement 20.

De préférence, chaque panneau déflecteur a des dimensions adaptées par rapport aux dimensions de la colonne de refroidissement 20 en regard de laquelle il est monté de manière à limiter au maximum toute déperdition d'air réchauffé par le passage au travers ou à proximité du module de puissance.

Par exemple, chaque panneau déflecteur a une forme de profil rectangulaire ou trapézoïdal, le panneau comportant un chanfrein de manière à être placé à un angle.

Par exemple, chaque panneau déflecteur est métallique ou en composite.

De préférence, chaque panneau déflecteur a une épaisseur comprise entre 1 et 5 millimètres.

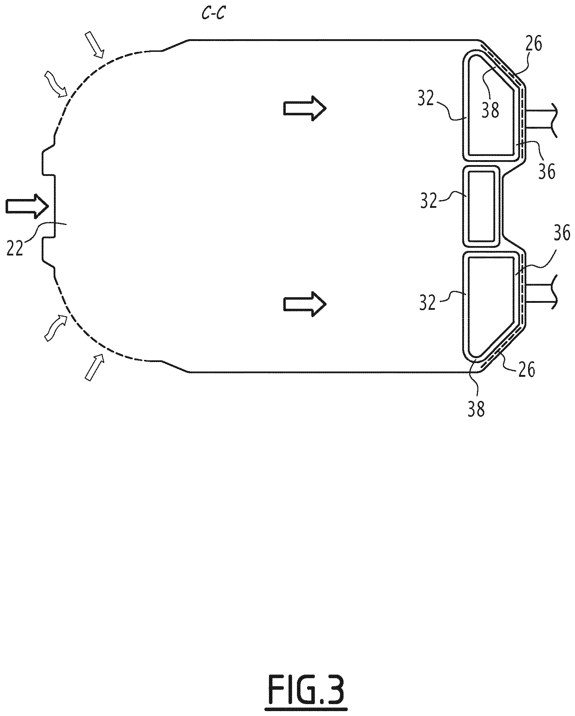

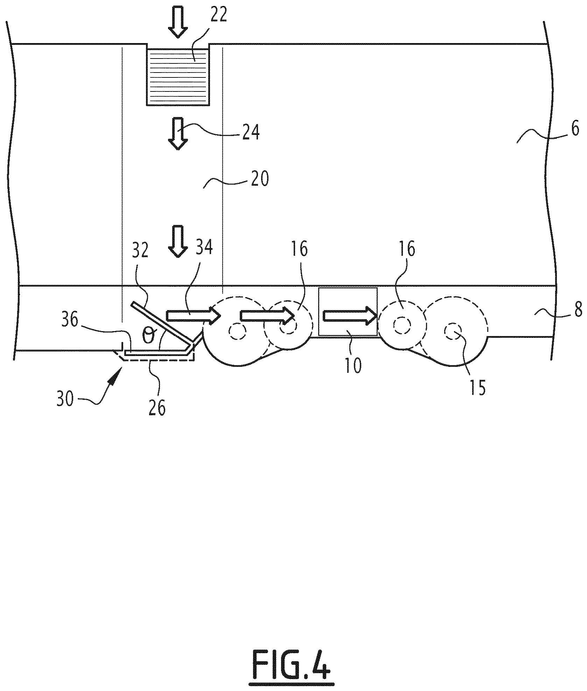

Selon l'invention, le panneau déflecteur est monté de manière à être positionnable dans deux positions, une première position de déviation de l'air telle que représentée sur la figure 4 et une deuxième position d'évacuation d'air dans laquelle le flux d'air est dirigé vers les dispositifs d'évacuation d'air classiquement prévu dans le système de refroidissement représentée sur la figure 3.

Dans la première position, le panneau déflecteur est placé à un angle θ par rapport à la direction horizontale (parallèle aux rails), par exemple compris dans l'intervalle de 30 à 60 degrés, comme illustré schématiquement sur la figure 4.

L'angle de chaque panneau déflecteur 32 est avantageusement choisi pour permettre de diriger le flux d'air réchauffé issu de la colonne de refroidissement 20 correspondante, dans sa quasi-totalité, sensiblement horizontalement vers le bogie et les autres éléments situés à proximité, les moteurs de traction et les essieux par exemple.

Dans un mode de réalisation, le système de protection 30 comporte un dispositif de fixation permettant de positionner le ou chaque panneau déflecteur 32 dans deux positions, une position dite fermée au printemps et en été et une position dite ouverte (déviation de l'air) en automne et en hiver.

Les panneaux déflecteurs mobiles 32 sont par exemple fixés sur des charnières horizontales en partie basse et fixées par un système de fixation en partie haute. Dans un mode de réalisation on prévoit deux possibilités de fixation fixes sur le châssis 8 de la caisse 6.

De préférence, le système de protection 30 comporte également des panneaux 36 d'obturation de bas de caisse, et des panneaux 38 d'obturation latérale, qui obturent les dispositifs d'évacuation d'air 26 prévus initialement pour l'évacuation de l'air de refroidissement du module de puissance, de manière à empêcher l'évacuation de cet air, et à augmenter l'efficacité du dispositif de protection.

Les panneaux d'obturation 36, 38 sont de préférence fixés chacun dans une position d'obturation permettant de conserver un maximum d'air en sortie des colonnes de refroidissement pour le diriger, grâce aux panneaux déflecteurs, vers les parties mentionnées ci-dessus du châssis, notamment vers le ou les bogies et les moteurs de traction. En plus des panneaux d'obturation 36, 38, un passage d'air est ouvert sur l'arrière du carénage sous caisse.

De préférence, les panneaux de déviation de l'air 32 et les panneaux d'obturation 36, 38 sont amovibles, de manière à pouvoir facilement installer ou enlever le système de protection 30 en fonction des conditions météorologiques.

Ainsi, avantageusement, le système de protection est mis en place pour une utilisation saisonnière, uniquement en conditions hivernales.

Par exemple, dans un cas d'utilisation, l'air issu des colonnes de refroidissement, après avoir traversé le module de puissance, est chauffé jusqu'à environ 10°C, ce qui est suffisant pour empêcher l'accumulation de neige et la formation de glace sur les éléments (bogie, moteurs de traction, essieux) vers lesquels cet air est dirigé.

Lorsque le véhicule ferroviaire est en roulement, l'air réchauffé est soufflé avec un débit sensiblement constant, par exemple 5 m³/s.

Avantageusement, le système de protection contre la neige et le gel proposé fonctionne sans utiliser d'énergie supplémentaire, sans utiliser de produit chimique de type antigel et sans dégrader les performances aérodynamiques du véhicule ferroviaire.

## Revendications

1. Véhicule ferroviaire (2) comportant au moins une caisse (6) montée sur un châssis (8), le châssis (8) supportant au moins un bogie (10) sur lequel sont fixés des moteurs de traction (16) des roues dudit véhicule (2), chaque moteur de traction (16) étant alimenté par au moins un module de puissance (18) adapté à fournir une puissance électrique audit moteur (16), et au moins une colonne de refroidissement (20) dudit au moins un module de puissance (18) permettant une circulation d'air externe vers des dispositifs d'évacuation (26) latérale et/ou centrale de bas de caisse, l'air traversant ladite colonne de refroidissement étant chauffée par au moins un module de puissance (18), le véhicule comportant un système de protection (30) du châssis de véhicule ferroviaire (2) comportant au moins un panneau déflecteur (32) monté sur ledit châssis (8) en vis-à-vis de la colonne de refroidissement (20), **caractérisé en ce que** le panneau déflecteur (32) est adapté à être positionné dans deux positions comprenant une première position de déviation de l'air traversant ladite colonne de refroidissement (20) vers au moins le bogie (10) et une deuxième position d'évacuation d'air.

2. Véhicule ferroviaire selon la revendication 1, dans lequel ledit système de protection de châssis comporte en outre au moins un panneau d'obturation (36, 38) adapté à obturer un dispositif d'évacuation (26) latérale et/ou centrale de bas de caisse correspondant.

3. Véhicule ferroviaire selon la revendication 1 ou 2, dans lequel dans ladite première position de déviation de l'air, le panneau déflecteur (32) est positionné à un angle compris entre 30 et 60 degrés par rapport à une direction horizontale.

4. Véhicule ferroviaire selon l'une quelconque des revendications 1 à 3, dans lequel le panneau déflecteur (32) est métallique ou en composite.

5. Véhicule ferroviaire selon l'une quelconque des revendications 1 à 4, comportant une pluralité de colonnes de refroidissement (20) et une pluralité de panneaux déflecteurs (32), chaque panneau déflecteur (32) étant positionné en regard d'une colonne de refroidissement (20).

## Patentansprüche

1. Schienenfahrzeug (2), umfassend mindestens einen Wagenkasten (6), der auf einem Fahrgestell (8) montiert ist, wobei das Fahrgestell (8) mindestens ein Drehgestell (10) trägt, an dem Antriebsmotoren (16) für die Räder des Fahrzeugs (2) befestigt sind, wobei jeder Antriebsmotor (16) von mindestens einem Leistungsmodul (18) gespeist wird, das angepasst ist, um dem Motor (16) elektrische Leistung zuzuführen, und wobei mindestens eine Kühlsäule (20) des mindestens einen Leistungsmoduls (18) eine externe Luftzirkulation zu seitlichen und/oder mittigen Auslassvorrichtungen (26) am Unterboden ermöglicht, wobei die durch die Kühlsäule strömende Luft durch mindestens ein Leistungsmodul (18) erwärmt wird, das Fahrzeug umfassend ein Schutzsystem (30) für das Fahrgestell des Schienenfahrzeugs (2), das mindestens eine Ablenkplatte (32) umfasst, die an dem Fahrgestell (8) gegenüber der Kühlsäule (20) montiert ist, **dadurch gekennzeichnet, dass** die Ablenkplatte (32) angepasst ist, um an zwei Positionen positioniert zu werden, umfassend eine erste Position zum Ablenken der durch die Kühlsäule (20) strömenden Luft in Richtung mindestens des Drehgestells (10) und eine zweite Position zum Ableiten von Luft.

2. Schienenfahrzeug nach Anspruch 1, wobei das Fahrgestellschutzsystem ferner mindestens eine Verschlussplatte (36, 38) umfasst, die angepasst ist, um eine entsprechende seitliche und/oder zentrale Auslassvorrichtung (26) am Unterboden zu schließen.

3. Schienenfahrzeug nach Anspruch 1 oder 2, wobei in der ersten Luftablenkposition die Ablenkplatte (32) in einem Winkel zwischen 30 und 60 Grad zu einer horizontalen Richtung positioniert ist.

4. Verfahren nach einem der Ansprüche 1 bis 3, wobei die Ablenkplatte (32) aus Metall oder Verbundstoff ist.

5. Schienenfahrzeug nach einem der Ansprüche 1 bis 4, umfassend eine Vielzahl von Kühlsäulen (20) und eine Vielzahl von Ablenkplatten (32), wobei jede Ablenkplatte (32) gegenüber einer Kühlsäule (20) positioniert ist.

## Claims

1. A railway vehicle (2) comprising at least one body (6) mounted on a chassis (8), the chassis (8) supporting at least one bogie (10) to which traction motors (16) for the wheels of said vehicle (2) are fixed, each traction motor (16) being powered by at least one power module (18) adapted to provide electrical power to said motor (16), and at least one cooling column (20) of said at least one power module (18) allowing external air to flow to lateral and/or central underbody exhaust devices (26), the air passing through said cooling column being heated by at least one power module (18), the vehicle comprising a protection system (30) for the rail vehicle chassis (2) comprising at least one deflector panel (32) mounted on said chassis (8) opposite the cooling column (20), **characterised in that** the deflector panel (32) is adapted to be positioned in two positions including a first position for deflecting air passing through said cooling column (20) towards at least the bogie (10) and a second position for exhausting air.

2. The railway vehicle according to claim 1, wherein said chassis protection system further comprises at least one closure panel (36, 38) adapted to close a corresponding lateral and/or central underbody exhaust device (26).

3. The railway vehicle according to claim 1 or 2, wherein in said first air deflection position, the deflector panel (32) is positioned at an angle of between 30 and 60 degrees relative to a horizontal direction.

4. The railway vehicle according to any one of claims 1 to 3, wherein the deflector panel (32) is made of metal or composite.

5. The railway vehicle according to any one of claims 1 to 4, comprising a plurality of cooling columns (20) and a plurality of deflector panels (32), each deflector panel (32) being positioned opposite a cooling column (20).
